# EUROPEAN PATENT APPLICATION

(11) **EP 4 708 865 A1**
(43) Date of publication of application: **11.03.2026**
(21) Application number: 24315407.7
(22) Date of filing: 04.09.2024
(51) Int. Cl.: H04N 19/70, H04N 21/2362, H04N 21/2365, H04N 21/434

(54) **METHOD AND APPARATUS FOR INTERWEAVING, AND ENCODER/DECODER INCLUDING THE SAME**

(71) Applicant: Beijing Xiaomi Mobile Software Co., Ltd., Beijing 100085 (CN)
(72) Inventor: Thomas, Emmanuel, Beijing, 100085 (CN); Potetsianakis, Emmanouil, Beijing, 100085 (CN); Alexiou, Evangelos, Beijing, 100085 (CN)
(74) Representative: Pfitzner, Hannes

(57) **Abstract**

The present invention provides a method of aggregate at least a first bitstream and a second bitstream into an interweaved bitstream, the method comprising:
determining an interweaving pattern;
determine one or more first interweaving unit(s) and one or more second interweaving unit(s),wherein the one or more first interweaving unit(s) is used for the first bitstream, the one or more second interweaving unit(s) is used for the second bitstream;
writing the one or more first interweaving unit(s) and the second interweaving unit to the interweaved bitstream.

## Description

### Technical Field

The present disclosure generally relates to the field of encoding/decoding pictures, images or videos, and embodiments of the present disclosure concern improvements regarding interweaving (e.g. in sense of combining bitstreams) and deinterweaving (e.g. in sense of separating bitstreams). More specific embodiments of the present disclosure relate to interweaving at least two independent bitstreams and deinterweaving at least two independent bitstreams.

### Background

A video bitstream is a data stream resulting from the compression of an uncompressed video sequence. The video bitstream is thus the output of a video encoder and it can be fed as input of a video decoder to reconstruct the encoded video. A media file, such as based on the ISOBMFF standard (e.g..mp4 files), is a file container for storing a video bitstream into a file, possibly together with other synchronised bitstreams such as audio or even subtitles.

Since MPEG-4 part 10 / Advanced Video Coding (AVC), the series of video coding standards jointly developped by MPEG and ITU adopt the concept of Network Abstraction Layer (NAL) units as the high-level data structure of a video bitstream. That is, a video bitstream conforming to AVC, HEVC, EVC or VVC is a sequence of NAL units.

When one needs to group one or more video bitstreams together, encapsulating streams it into a file, e.g. a ISOBMFF file, cause the issue that it is no longer a succession of NAL units. Therefore, there is the need for an improved approach.

### Summary

An embodiment provides a method for encoding and aggregating at least a first bitstream and a second bitstream into an interweaved bitstream, the first bitstream and the second bitstream being independent from each other, the method comprising:
- determining an interweaving pattern;
- determine one or more first interweaving unit(s) and one or more second interweaving unit(s),wherein the one or more first interweaving unit(s) is used for the first bitstream, the one or more second interweaving unit(s) is used for the second bitstream;
- writing the one or more first interweaving unit(s) and the second interweaving unit to the interweaved bitstream.

An embodiment provides the method further comprising:
- determining a further first interweaving unit and a further second interweaving unit;
- writing the further first interweaving unit and second or the further second interweaving unit to the interweaved bitstream.

An embodiment provides the method, wherein determining and writing are repeated as long as more data exist.

An embodiment provides the method, wherein determining and writing is repeated for one or more first interweaving unit(s) of the third or further independent bitstream.

An embodiment provides the method, wherein
determining the one or more first interweaving unit(s) of the first bitstream and the one or more first interweaving unit(s) of the second bitstream comprises a check whether of the first and second bitstream exist; and/or
determining the one or more first interweaving unit(s) of the third or further independent bitstream comprises a check whether of the third or further independent bitstream exist.

An embodiment provides the method, wherein the interweaved bitstreams comprise at least one of an interweaving pattern or a number of source bitstreams as interweaving information being transmitted as part of the interweaving bitstream or out of band or via a SEI message.

An embodiment provides the method furthe3r comprising performing the steps of "determining an interweaving pattern", "determine one or more first interweaving unit(s) and one or more second interweaving unit(s)" and "writing the one or more first interweaving unit(s) and the second interweaving unit to the interweaved bitstream" without signaling if a specific number of bitstreams (e.g. two) are used.

An embodiment provides the method, further comprising signaling of interweaving pattern via a as interweaving information or via a SEI message comprising information one or more of the following:
- parameters indicating the interweaving;
- parameters describing an interweaving strategy;
- parameters describing the interweaving pattern;
- flag for cancels the persistence of any previous interweaving information SEI message;
- number of bitstream that have been interweaved;
- structure or order of interweaving pattern;
- number of pattern slots;
- pattern slot value.

An embodiment provides the method, wherein for indicating an updated interweaving process a SEI message is transmitted.

An embodiment provides the method, wherein the interweaving pattern defines an symmetrical pattern or a rotating pattern or a pattern having a same order over the interweaving units or a pattern defined by
- one or more first interweaving unit(s)s subsequent to each other; or
- one or more second interweaving unit(s) before one or more first interweaving unit(s); or
- a third or further before one or more second interweaving unit(s);
- a first and one or more second interweaving unit(s) being inserted in the interweaved bitstream in an alternating manner.

An embodiment provides the method, wherein the one or more first interweaving unit(s) is a single NAL units or several NAL units, e.g. an access unit or frame.

An embodiment provides the method, wherein first and second bitstreams are composed of different number of interweaving units; and/or
wherein the first and second bitstreams are of the different codec or different video coding standard; and/or
wherein the one or more first interweaving unit(s) is a single NAL units or several NAL units, e.g. an access unit or frame.

An embodiment provides the method, wherein the first and second bitstreams are of the different codec or different video coding standard.

An embodiment provides the method, wherein inserting in-between each interweaving unit or interweaving units of different codec a codec information message about the interweaving process or interweaving pattern; or
wherein inserting in-between each interweaving unit or interweaving unit of different codec a codec information message about the interweaving process or interweaving pattern and the codec information message comprising one or more of the following:
o bitstream identifier specifying a source bitstream for a subsequent interweaving unit;
o codec identifier indicating a nature of a subsequent interweaving unit;
o indication on compliancy to legacy bitstream parser.

An embodiment provides the method, the codec information message comprising one or more of the following:
o bitstream identifier specifying a source bitstream for a subsequent interweaving unit;
o codec identifier indicating a nature of a subsequent interweaving unit;
o indication on compliancy to legacy bitstream parser .

An embodiment provides a method for decoding and extracting at least a first bitstream and a second bitstream from an interweaved bitstream, the first bitstream and the second bitstream being independent from each other, the method comprising:
- determining an interweaving pattern;
- determining one or more first interweaving unit(s) of a first bitstream and a second bitstream within the interweaved bitstream;
- writing one or more first interweaving unit(s) of the first bitstream to an output of the first bitstream and writing one or more first interweaving unit(s) of the second bitstream to an output bitstream of the second bitstream.

An embodiment provides an apparatus for encoding and aggregating at least a first bitstream and a second bitstream into an interweaved bitstream, the first bitstream and the second bitstream being independent from each other, comprising a processor for:
- determining an interweaving pattern;
- determine one or more first interweaving unit(s) and one or more second interweaving unit(s),wherein the one or more first interweaving unit(s) is used for the first bitstream, the one or more second interweaving unit(s) is used for the second bitstream;
- writing the one or more first interweaving unit(s) and the second interweaving unit to the interweaved bitstream.

An embodiment provides an apparatus for decoding and extracting at least a first bitstream and a second bitstream from an interweaved bitstream, the first bitstream and the second bitstream being independent from each other, comprising a processor for:
- determining an interweaving pattern;
- determining one or more first interweaving unit(s) of a first bitstream and a second bitstream within the interweaved bitstream;
- writing one or more first interweaving unit(s) of the first bitstream to an output of the first bitstream and writing one or more first interweaving unit(s) of the second bitstream to an output bitstream of the second bitstream.

An embodiment provides a data stream having encoded thereinto a video or picture, wherein the data stream comprises an interweaved bitstream aggregate including content of at least a first bitstream and a second bitstream into, the first bitstream and the second bitstream being independent from each other, wherein at least one or more first interweaving unit(s) of the first bitstream and at least one or more first interweaving unit(s) of the second bitstream to the interweaved bitstream are arranged, for example, according to an interweaving strategy and/or an interweaving pattern.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: illustrates an example of AVC NAL unit syntax;
- Fig. 2: illustrates an example of VVC NAL unit syntax;
- Fig. 3: illustrates an example of VVC NAL unit type codes and NAL unit type classes;
- Fig. 4: illustrates an example of AV 1 OBU syntax [1];
- Fig. 5: illustrates a block diagram of MPEG-4 part 1's flow diagram for the systems decoder model;
- Fig. 6a: illustrates an exemplary structure of M4Mux packet in simple mode;
- Fig. 6b: illustrates an exemplary structure of M4Mux packet in MuxCode mode;
- Fig. 6c: illustrates an example for packetization of NAL units into M4Mux packets;
- Fig. 7a: shows a block diagram illustrating the interweaving process according to a disclosure and the deinterweaving process according to a disclosure;
- Fig. 7b-d: show flow charts illustrating methods according to different disclosures;
- Fig. 8: illustrates an example of interweaved bitstream of the same number of NAL units according to a disclosure;
- Fig. 9: illustrates an example of the issue with a different number of NAL units according to a disclosure;
- Fig. 10: illustrates an example for updating interweaving information when pattern changes according to a disclosure;
- Fig. 11: illustrates an example for changing of pattern chosen by interweaver (here to group by frame) according to a disclosure;
- Fig. 12: illustrates an example of an explicit interweaving pattern signalling according to a disclosure;
- Fig. 13: illustrates an example of *byte stream format in AVC Annex B*
- Fig. 14: illustrates an example of *byte stream format in HEVC Annex B*
- Fig. 15: illustrates an example of a byte stream format in VVC Annex B;
- Fig. 16: illustrates a block diagram illustrating an electronic device according a disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

Before discussing the disclosure the background and the prior art will be discussed so as to describe the problem to be solved.

### Based on NAL unit

Since MPEG-4 part 10 / Advanced Video Coding (AVC), the series of video coding standards jointly developped by MPEG and ITU adopt the concept of Network Abstraction Layer (NAL) units as the high-level data structure of a video bitstream. That is, a video bitstream conforming to AVC, HEVC, EVC or VVC is a sequence of NAL units. For each standard, a NAL unit may be composed of a header followed by a payload. The header has typically the same syntax for a given standard. However, the syntax and size of the header may vary from one standard to another.

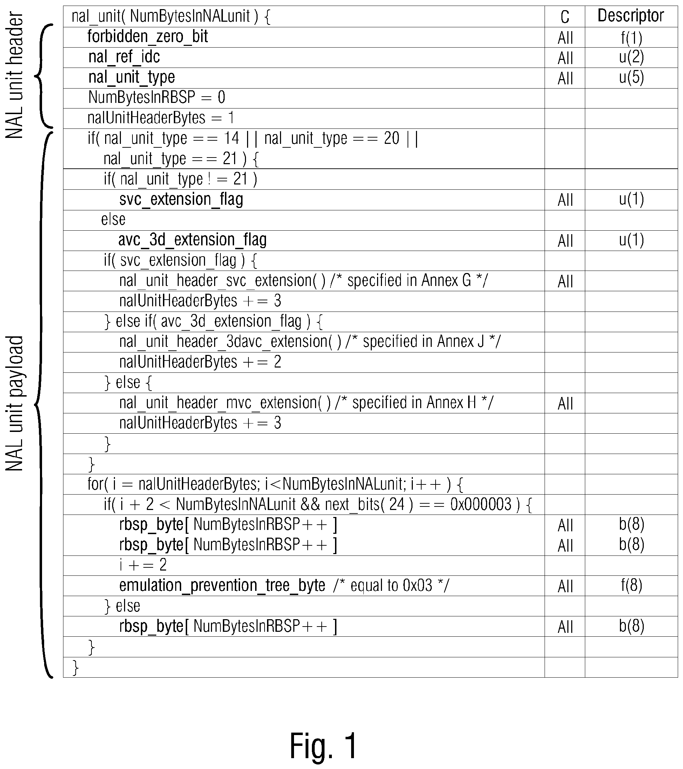

For example, Fig. 1 represents the syntax of the AVC NAL unit.

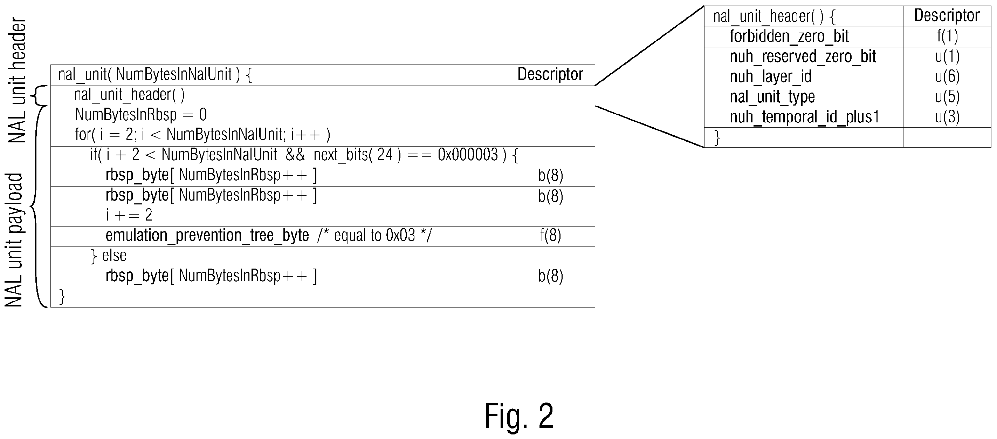

Another example is from the VVC standard as shown in Fig. 2 shows exemplarily a VVC NAL unit syntax. Fig. 1 and 2 the NAL unit header and the NAL unit payload is marked. As can be seen with respect to Fig. 2, the NAL unit header of the VVC NAL unit syntax comprises more content than just shown in the first figure, i.e. in the AVC NAL unit header.

For example, the following elements are common to all the NAL unit header across the different video coding standard is that:
- The header does not contain the total size of the NAL unit;
- The header contains a syntax element to signal the type of NAL unit which determine how to parse the payload of this NAL unit.

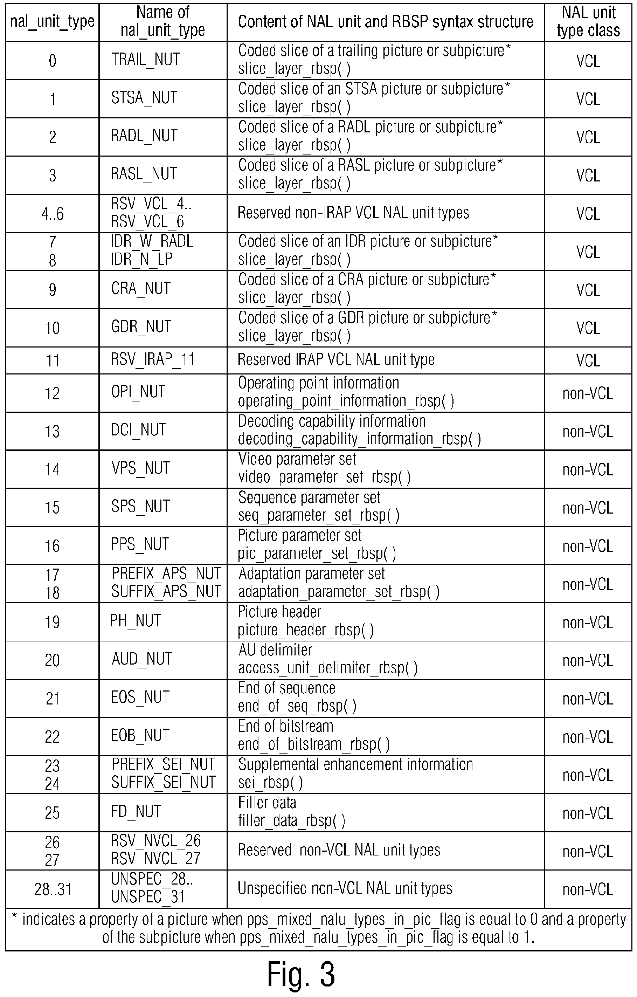

For example, Fig. 3 shows the list of NAL unit types for the VVC standard VVC NAL unit type codes and NAL unit type classes and the respective content.

### Based on OBU (AV1)

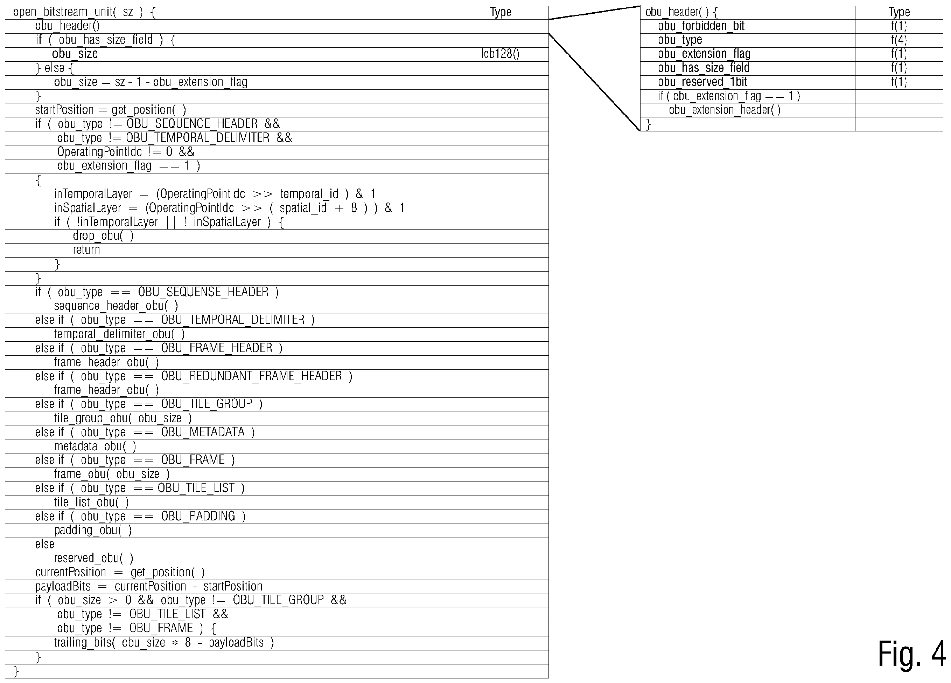

The AV1 video coding standard defines the high-level data structure called the Open Bitstream Unit (OBU) whose syntax is represented in Fig. 4. Fig. 4 shows a AV1 OBU syntax [1]. Again the information included in the header is highlighted on the right hand side.

In essence, it is very similar to the NAL unit concept:
- An OBU header has a obu_type to determine the type of the current OBU
- As opposed to a NAL unit, an OBU can contain its size which is signalled in the field called obu_size. The presence of the obu_size field is conditioned to the Boolean syntax obu_has_size_field in the header.

### On MPEG elementary stream

In MPEG-4 part 1 Systems [2] was first published in 1999 and the latest edition in 2010 (4^{th} edition). This specification defines the concept of elementary stream as follows:

The Elementary Stream (ES) represents consecutive flow of mono-media data from a single source entity to a single destination entity on the compression layer.

This concept of elementary stream was defined generic enough to be representative of any bitstream of different video coding specifications but also bitstreams of different nature such as audio bitstreams.

An elementary stream as defined in MPEG-4 part 1 is partitioned into access units. An access unit is the smallest data entity to which timing information can be attached to. Two access units from the same elementary stream shall never refer to the same decoding or composition time.

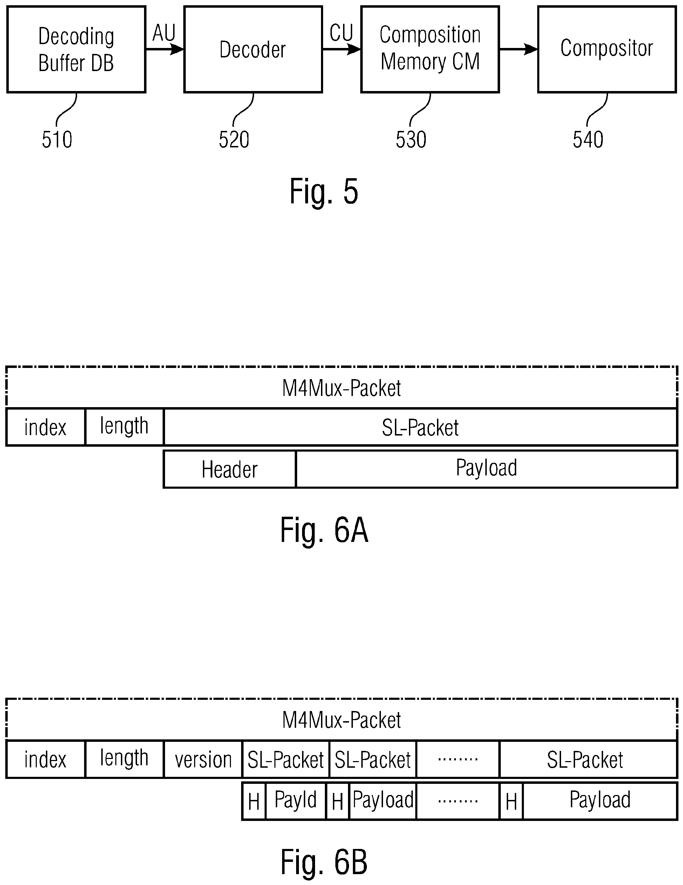

Fig. 5 shows a flow diagram for the systems decoder model. Here the entity 510 performs the buffering of the elementary stream before decoding. This is then provided to the Decoder in 520. CU results from decoding AU. There may be several composition units resulting from decoding one access unit. When access units are decoded, the corresponding Composition Units are stored in the Composition Memory in 530. 530 provides the input for the decoder. In 540 the current composition unit is output from the Composition Memory and sent for presentation into the Compositor that will take care of displaying of the one or more elementary streams composing the presentation.

In practice, an access unit may typically correspond to an encoded video frame in case of a video bitstream. In the specific case of NAL unit-based video bitstream, an access unit is thus the one or more NAL units corresponding to an encoded video frame.

### Description of the prior art

Below, the prior art will be discussed.

MPEG-4 part 1 provides a mean to packetize an elementary stream into a Sync Layer(SL)-packet streams:
The sync layer (SL) specifies a syntax for the packetization of elementary streams into access units or parts thereof.

An SL packet consists of an SL packet header and an SL packet payload.

### SL Packet Specification - Syntax

The syntax can be as follows:

```
    class SL_Packet (SLConfigDescriptor SL) {
    aligned(8) SL_PacketHeader slPacketHeader(SL);
    aligned(8) SL_PacketPayload slPacketPayload;
 }
```

### SL Packet Specification - Semantics

In order to properly parse an SL_Packet, it is required that the SLConfigDescriptor for the elementary stream to which the SL_Packet belongs is known, since the SLConfigDescriptor conveys the configuration of the syntax of the SL packet header.
slPacketHeader - an SL_PacketHeader element as specified above.
slPacketPayload - an SL_PacketPayload that contains an opaque payload.

Furthermore, MPEG-4 part 1 provides a mean to multiplex any elementary stream into a single stream called a M4Mux stream. See below discussion to the MPEG-4 part 1 [2]:
The basic data entity of the M4Mux is a M4Mux packet, which has a variable length. One or more SL packets are embedded in a M4Mux packet as specified in detail in the remainder of this Subclause. The M4Mux tool provides identification of SL packets originating from different elementary streams by means of M4Mux Channel numbers.
[...]

Two different modes of operation of the M4Mux providing different features and complexity are defined. They are called Simple Mode and MuxCode mode. A M4Mux Stream may contain an arbitrary mixture of M4Mux packets using either Simple Mode or MuxCode mode. The syntax and semantics of both modes are specified below.

As defined further in MPEG-4 part 1, the two modes are: simple mode and MuxCode Mode.

### Simple Mode

In the simple mode one SL packet is encapsulated in one M4Mux packet and tagged by an index which is equal to the M4Mux Channel number as indicated in Fig. 6a.

Fig. 6a illustrates exemplarily the structure of the M4Mux packet and simple mode. Here the header and the payload are highlighted. This mode does not require any configuration or maintenance of state by the receiving terminal.

### MuxCode mode

In the MuxCode mode one or more SL packets are encapsulated in one M4Mux packet as indicated in Fig. 6b. Fig. 6b illustrates a structure of the M4Mux packet in Mux code mode. Again the header and payload is illustrated, wherein there are a plurality of headers and payloads arranged subsequent to each other.

This mode requires configuration and maintenance of state by the receiving terminal. The configuration describes how M4Mux packets are shared between multiple SL packets. In this mode the index value is used to dereference configuration information that defines the allocation of the M4Mux packet payload to different M4Mux Channels.

The M4Mux packet syntax is further defined as follows:

### M4Mux packet specification - Syntax

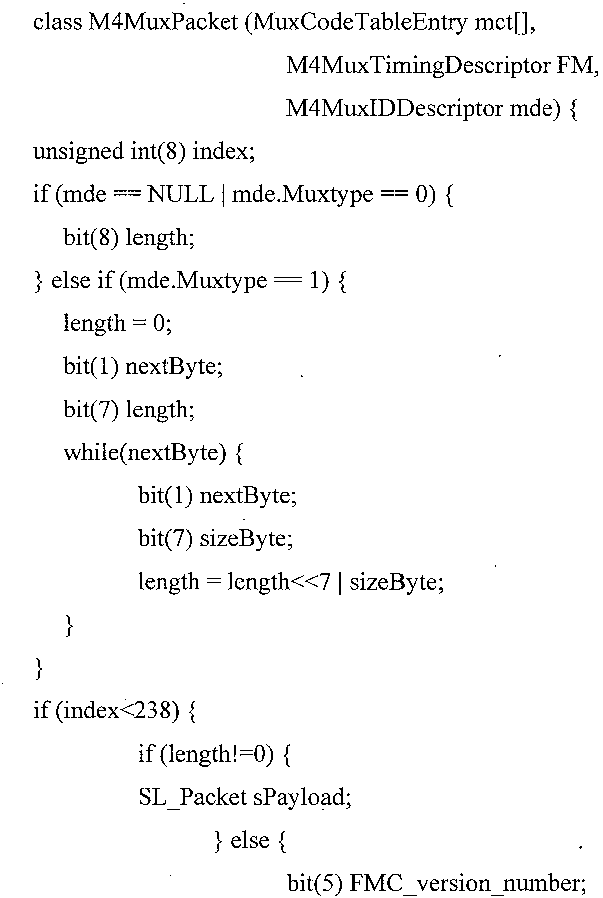

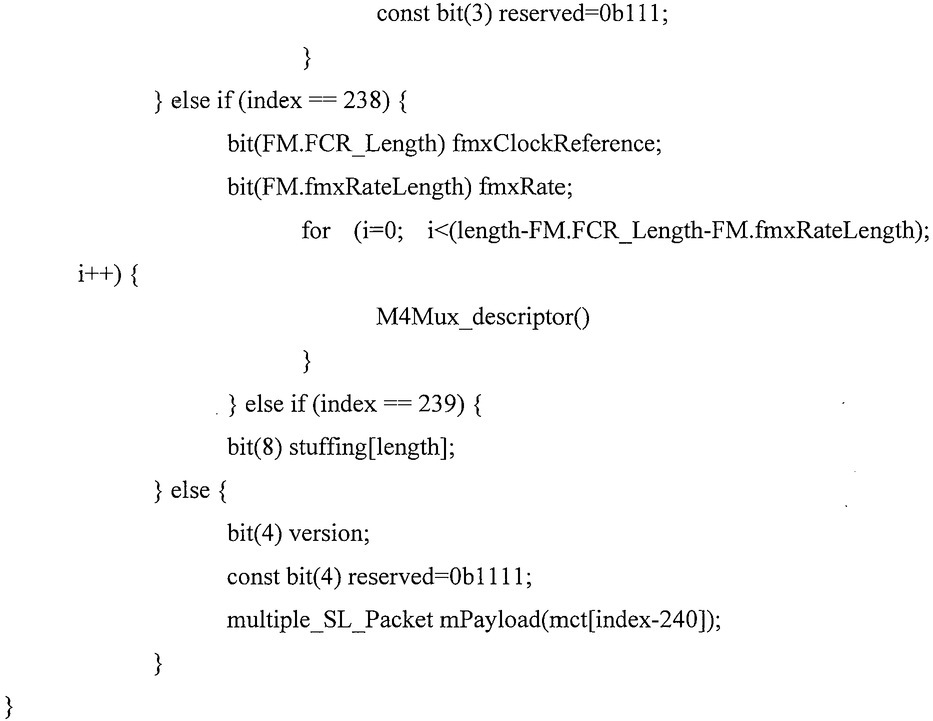

### M4Mux packet specification - Semantics

Regarding the length - the length of the M4Mux packet payload in bytes. This is equal to the length of the single encapsulated SL packet in Simple Mode and to the total length of the multiple encapsulated SL packets in MuxCode mode. If the M4MuxIDDescriptor is not used, or if it is used and if the Muxtype is designing the first M4Mux tool, the length field is on one byte. If the M4MuxIDDescriptor is used and if the Muxtype is designing the second M4Mux tool, the length calculation relies on the combination of the nextByte and sizeByte fields that can be spread over several bytes. In Simple Mode, when this length is equal to zero, the M4Mux packet carries one byte that contains the FMC_version_number field. In Simple Mode, M4Mux packets with a length equal to zero (each carrying a FMC_version_number) can be duplicated.

Regarding FMC_version_number - This 5 bit field indicates the current version of the M4MuxChannelDescriptor that is applicable. FMC_version_number is used for error resilience purposes. If this version number does not match the version of the referenced M4MuxChannelDescriptor that has most recently been received, the following M4Mux packets belonging to the same M4Mux Channel cannot be parsed. The implementation is free to either wait until the required version of M4MuxChannelDescriptor becomes available or to discard the following M4Mux packets belonging to the same M4Mux Channel. In Simple Mode, the value given to the FMC_version_number field is identical in subsequent duplicated M4Mux packets with a length equal to zero.

Based on this description, if one wants to multiplex multiple video bitstreams using the M4Mux packet, one M4Mux packet will contain one SL packet. The SL packet contains the payload, e.g. packetized into the NAL units for one access unit. This case is illustrated in Fig, 6.

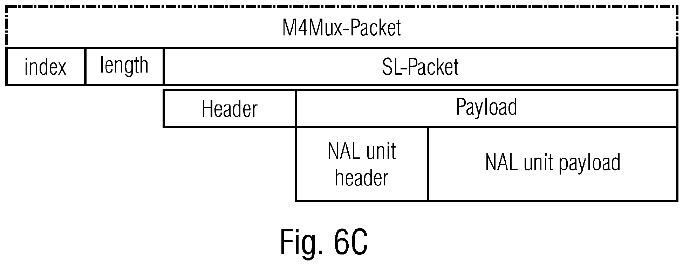

Fig. 6c illustrates the packetization of NAL units into M4Mux packets. As can be seen, the payload comprises the NAL unit header and the NAL unit payload.

### Detailed introduction of the technical disclosure - Application scenario

Below, different application scenarios for the subject-matter of the technical disclosure will be discussed.

Scenario: A source produces two or more video bitstreams.

A bitstream processor interweaves those multiple bitstreams into one bitstream, called interweaved bitstream, and then transmits this bitstream.

For distribution and/or storage, the interweaved bitstream is considered as single bitstream and has the outside appearance of it.

When consumed, the receiving device first deinterweaves the bitstream to recompose the multiple original bitstreams.

Each bitstream can be passed on to respective decoders for decoding.

Example applications that fit this scenario are:
- stereoscopic video content where the left and right views can be encoded as separate bitstreams.
- RGBD content where the texture and depth sequences are encoded as two independent bitstreams.
- Video with alpha channels where the video is one bitstream and the associated alpha sequence constitutes another encoded video sequence as a second bitstreams. Some codec like HEVC and VVC have auxiliary layers to convey alpha channels but auxiliary layers and related profiles have limited support in the industry. Also some codec may not have auxiliary layer feature at all.
- Any other application with multiple video sequences that are typically consumed together would also be a target.

Starting with this, the problem to be solved can be characterized as follows:

The prior art has the following disadvantages when it is applied to independent NAL unit-based and OBU-based video bitstreams. For the following disadvantages, we take the case of using NAL unit-based video bitstreams for brevity's sake but it equally applies to OBU-based video bitstreams:

The M4Mux packet multiplexes SL-packets which each contains NAL units, therefore when one wants to multiplex NAL units, this adds two levels of overhead for the multiplexing: one from the SL packets and another one from the M4Mux packets.

The M4Mux packet wraps up NAL units into a SL-packet into new packet with prefix of an index and a length. Consequently:

A stream of M4Mux packets is no longer a NAL unit streams and no NAL unit stream parser can not be used to parse such a stream, e.g. file writer, video decoder, media-aware network entity (MANE), etc...

A NAL unit-based video decoder is not capable of decoding a M4Mux stream since the NAL units are "hidden" in the M4Mux packet and cannot be parsed by the video decoder.

For storage, file formats of NAL unit-based bitstream are defined based on NAL units framing of video bitstreams, e.g. as defined in ISO/IEC 14496-15 [3]. Therefore, a file writer would fail to parse a M4Mux stream for encapsulating it into a file, e.g. a ISOBMFF file, since it is not a succession of NAL units.

### Detailed introduction of the technical disclosure - Technical description of the solution

Below, a basic embodiment of the present disclosure will be discussed. Here a distinction between two interacting elements is done. On the encoder side an interweaving element can be used. It outputs an interweaved bitstream. Independently, on the decoder side a deinterweaving element can be used.

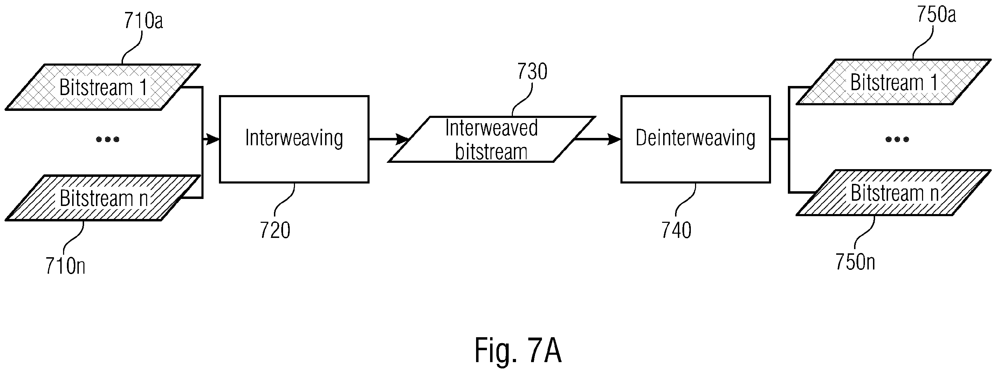

First, the interweaving element will be discussed with respect to Fig. 7a.

Fig. 7a shows the interweaving element 720 outputting the interweaved bitstream 730 which can then be used by the deinterweaving element 740. The input for the interweaving 720 is at least a first bitstream 710a and a second interweaving bitstream 710n. Note, the first bitstream and the second bitstream are independent from each other. Optionally more interweaving bitstreams as illustrated by the "..." can serve as input for the interweaving element 720.

The interweaving element 720 receives the bitstream 710a and 710n.

The element 720 / the solution allows to aggregate one or more independent bitstream 710a, 710n into a single interweaved bitstream 730 while this interweaved bitstream 730 can be transmitted and stored as a conventional bitstream. By doing so, applications that require multiple bitstreams 710a-710n to be encoded, transmitted and then decoded on the receiver side can aggregate those bitstreams into a single bitstream thus hiding the fact it corresponds to multiple bitstreams to higher level of the system. This way, the transmission and storage level of the system do not have to deal with the complexity of handling multiple bitstreams.

After storage or transmission of 730, the process of interweaving can be reversed to reconstruct the original bitstreams as will be discussed in chapter Deinterweaving with respect to Fig. 7a.

A first aspect of the invention provides a method of aggregate at least a first bitstream and a second bitstream into an interweaved bitstream, the first bitstream and the second bitstream being independent from each other, the method comprising:
determining an interweaving pattern;
determine one or more first interweaving unit(s) of the first bitstream 710a and one or more first interweaving unit(s) of the second bitstream 710n;
writing the one or more first interweaving unit(s) and the second interweaving unit to the interweaved bitstream (according to an interweaving strategy).

Note the term 'one or more first interweaving unit(s)' can also be referred to as 'one or more first interweaving unit(s) of the first bitstream,' and 'one or more second interweaving unit(s)' can also be referred to as 'one or more first interweaving unit(s) of the second bitstream, and vice versa.

In a further implementation, determining and writing is repeated for one or more first interweaving unit(s) of the third or further independent bitstream. According to embodiments, copying may mean writing. It should be notated that writing may comprise a step of transforming (e.g. before writing), so that not necessary a 1:1 copy of bits or bytes is written.

In a further implementation, determining the one or more first interweaving unit(s) of the first bitstream and the one or more first interweaving unit(s) of the second bitstream comprises a check whether of the first and second bitstream exist;.

Additionally or alternatively, determining the one or more first interweaving unit(s) of the third or further independent bitstream comprises a check whether of the third or further independent bitstream exist.

### Interweaving

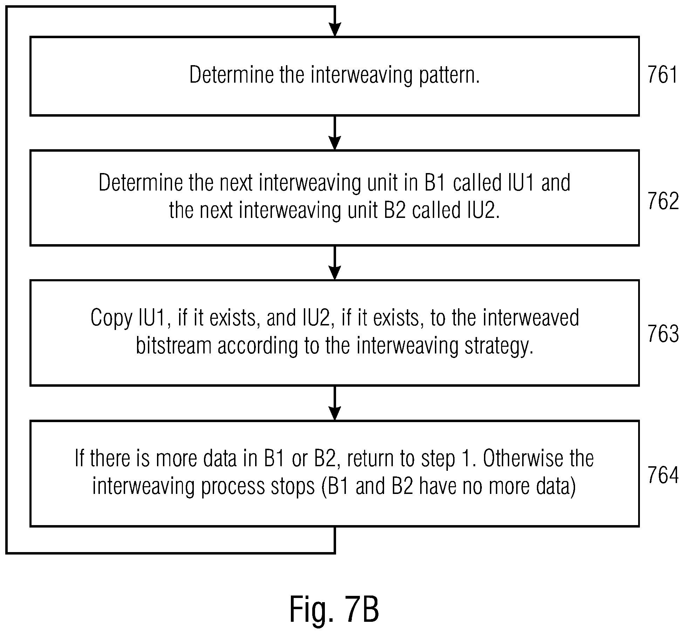

Fig. 7b - Illustration of the interweaving process according to a disclosure with respect to the steps.

This method implements according to a disclosure the steps of interweaving a first bitstream B1 and a second bitstream B2:
Determine the interweaving pattern (cf. step 761).
Determine the next interweaving unit in B1 called IU1 and the next interweaving unit B2 called IU2 (cf. step 762).
Copy IU1, if it exists, and IU2, if it exists, to the interweaved bitstream according to the interweaving strategy (cf. step 763).
If there is more data in B1 or B2, return to step 1.
Otherwise the interweaving process stops (B1 and B2 have no more data), (cf. step 764)

In a first implementation, the method further comprises:
determining a further first interweaving unit and a further second interweaving unit;
writing the further first interweaving unit and the further second interweaving unit to the interweaved bitstream according to the interweaving strategy.

In a further implementation, determining and writing are repeated as long as more data exist.

According to embodiments, an interweaving unit can be a single NAL unit or several NAL units, e.g. an access unit or frame as explained later in embodiment.

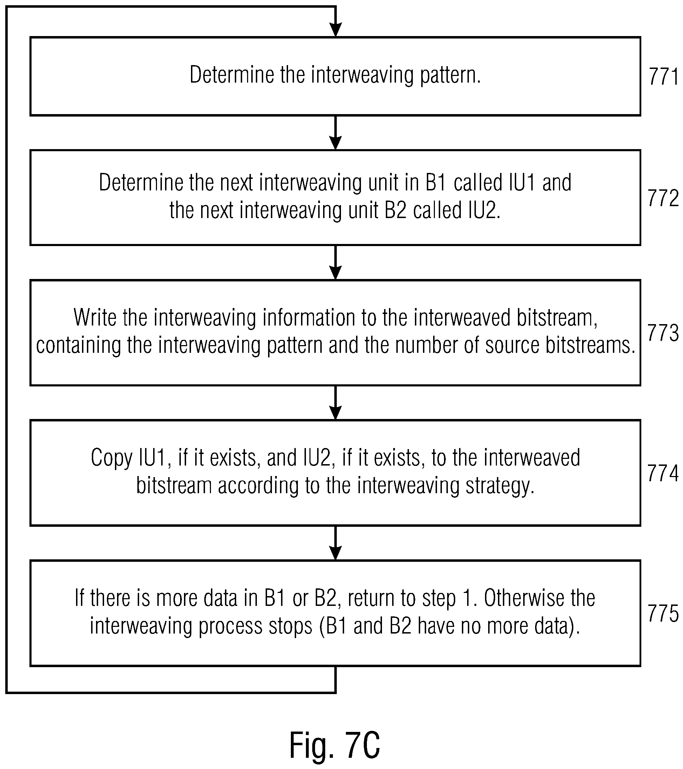

If the interweaving strategy cannot be inferred, most probable case, then it may be according to a disclosure signalled in the interweaved bitstreams. The steps (cf. Fig. 7c) would be:
Determine the interweaving pattern (cf. step. 771).
Determine the next interweaving unit in B1 called IU1 and the next interweaving unit B2 called IU2 (cf. step. 772).
Write the interweaving information to the interweaved bitstream, containing the interweaving pattern and the number of source bitstreams (cf. step. 773). (optionally more information as shown in further embodiments)
Copy IU1, if it exists, and IU2, if it exists, to the interweaved bitstream according to the interweaving strategy (cf. step. 774).
If there is more data in B1 or B2, return to step 1.
Otherwise the interweaving process stops (B1 and B2 have no more data) (cf. step. 777).

In a further implementation of the method according to the first aspect, the interweaving pattern is determined from the context, e.g. session information, system information, or by convention of standards.

### Deinterweaving

Fig. 7a also shows the Deinterweaving of the bitstream 730 using the Deinterweaving entity 740 so as to obtain the bitstreams 750a to 750n.

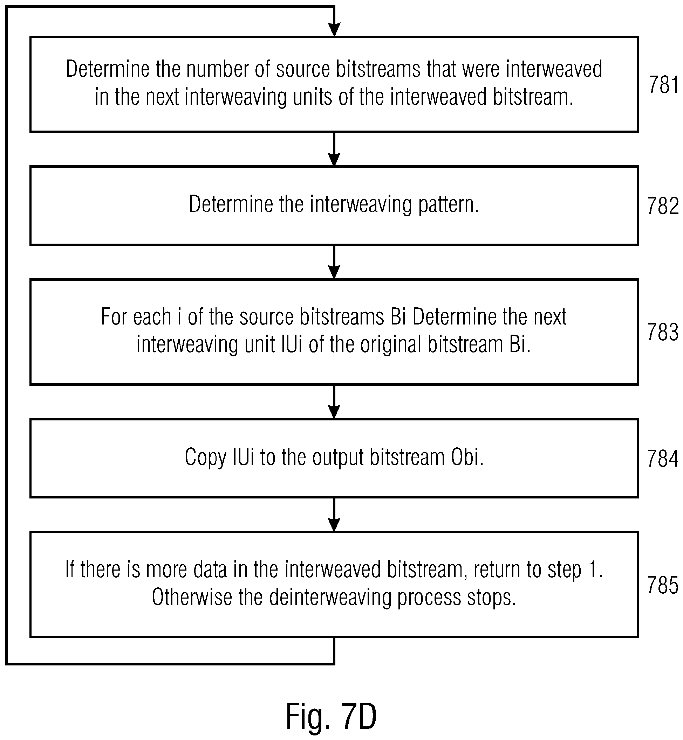

The following steps as illustrated by Fig. 7d are implemented to perform the deinterweaving process according to a disclosure.
Determine the number of source bitstreams that were interweaved in the next interweaving units of the interweaved bitstream.
Determine the interweaving pattern.
For each i of the source bitstreams Bi
Determine the next interweaving unit IUi of the original bitstream Bi.
Copy IUi to the output bitstream Obi.
If there is more data in the interweaved bitstream, return to step 1.
Otherwise the deinterweaving process stops.

Thus, an embodiment of a second aspect provides a method for decoding and extracting at least a first bitstream and a second bitstream from an interweaved bitstream, the first bitstream and the second bitstream being independent from each other, the method comprising:
- determining an interweaving pattern;
- determining one or more first interweaving unit(s) of a first bitstream and a second bitstream within the interweaved bitstream;
- writing one or more first interweaving unit(s) of the first bitstream to an output of the first bitstream and writing one or more first interweaving unit(s) of the second bitstream to an output bitstream of the second bitstream.

In a further implementation of the method of the second aspect, determining and writing is repeated for one or more first interweaving unit(s) of the third or further independent bitstream.

In a further implementation of the method of the second aspect as such or according to the first implementation of the second aspect, the method further comprises stopping the deinterweaving process if no further data exist.

Note that after a first pass of steps 1,2 and 3, in most cases the number of source bitstreams and the pattern has not changed. Based on the following embodiment, the process is able to determine is any of those have changed based on the presence or absence of signaled information.

Below, embodiments will be discussed referring to different scenarios.

In a further implementation of the method of the second aspect as such or according to the first implementation of the second aspect, determining an interweaving pattern comprises determining a signal on an interweaving strategy in the interweaved bitstream or determining a presence or absence of a signal in the interweaved bitstream.

In a further implementation of the method of the second aspect as such or according to the first implementation of the second aspect, determining an interweaving pattern comprises determining information signaled in the interweaved bitstreams on interweaving strategy or on the interweaving pattern or a number of source bitstreams or performing without signaling if only two bitstreams are used.

In a further implementation of the method of the second aspect as such or according to the first implementation of the second aspect, determining an interweaving pattern comprises determining information signaled regarding interweaving pattern via a SEI message.

In a further implementation of the method of the second aspect as such or according to the first implementation of the second aspect, determining a new interweaving bitstream using a new SEI message, wherein for each new interweaving bitstream a new SEI message is used.

In a further implementation of the method of the second aspect as such or according to the first implementation of the second aspect, determining an updated interweaving bitstream indicated by a SEI message as part of the determining interweaving pattern.

In a further implementation of the method of the second aspect as such or according to the first implementation of the second aspect, determining one or more first interweaving unit(s) of a first bitstream and a second bitstream within the interweaved bitstream is done using the message or the SEI message.

In a further implementation of the method of the second aspect as such or according to the first implementation of the second aspect, writing is performed according the interweaved pattern.

In a further implementation, the interweaving pattern defines an symmetrical pattern or a rotating pattern or a pattern having a same order over the interweaving units or a pattern defined by
- one or more first interweaving unit(s)s subsequent to each other; or
- one or more second interweaving unit(s) before one or more first interweaving unit(s); or
- a third or further before one or more second interweaving unit(s);
- a first and one or more second interweaving unit(s) being inserted in the interweaved bitstream in an alternating manner;
- odd interweaving units to be extracted from the interweaved bitstream as a first and even interweaving units to be extracted from the interweaved bitstream as one or more second interweaving unit(s).

### Scenario 1: Interweaving two bitstreams of the same codec

In this first scenario according to a disclosure, the case of interweaving two bitstreams of the same video coding standard will be addressed. Let's assume two bitstreams A and B being produced by two different encoders. We will consider the case of the AVC video coding standard but this scenario would equally apply to any other video coding standard. In the case of AVC then, a bitstream is a sequence of AVC NAL units as presented in the section background.

In a further implementation of the method according to the first aspect, the first and second bitstreams are of the same codec or same video coding standard.

### Case 1a: Both bitstreams have the same number of NAL units

According to a disclosure, in a first case, the two bitstreams are composed of the same number of NAL units. In this case, the interweaving process can be alternating between one NAL unit of the bitstream A and one NAL unit of the bitstream B.

In a further implementation of the method according to the first aspect, the one or more first interweaving unit(s) is a single NAL units or several NAL units, e.g. an access unit or frame.

Preferred, first and second bitstreams are composed of same number of interweaving units.

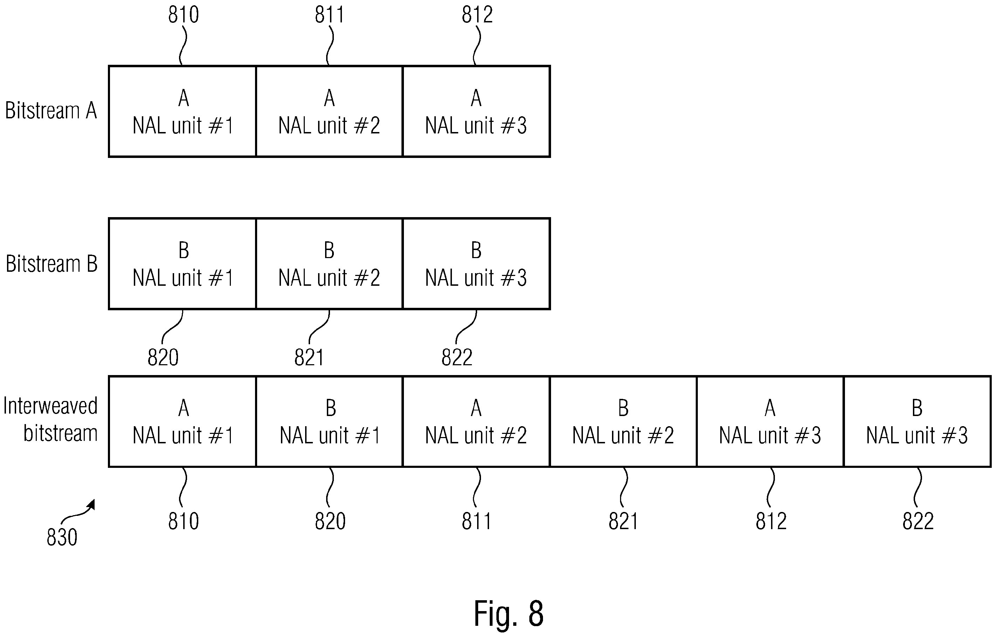

Fig. 8 illustrated an interweaved bitstream of the same number of NAL units. The interweaving units of bitstream A are marked by 810, 811 and 812, wherein the interweaving units of bitstream B are marked by 820, 821 and 822. In both illustrations of the bitstream A/bitstream B and of the interweaved bitstream 830.

The reverse process would separate odd and even NAL units from the interweaved bitstream to reconstruct the original two bitstreams.

To achieve this reverse process, that is deinterweaving, the bitstream processor has to know how the interweaving was configured.

### Embodiment 1: Inferred interweaving pattern

The interweaving can according to a disclosure be inferred by convention. In a particular system, the interweaving pattern may be inferred from the context, e.g. session information, system information, by convention of standards.

In addition, if for example only two bitstreams are used, then the deinterweaving process could take place without added signalling.

This may require several conditions to be true which will not limit the applicability of such solution. Therefore explicit signalling of the interweaving pattern is according to a disclosure desirable. See following embodiment.

### Embodiment 2:- Signalling of interweaving pattern via a new SEI message

### General

In this embodiment, the interweaving pattern is signalled in the interweaved bitstream by mean of a new SEI message.

Note that this is possible to do since we are in the case that the bitstreams to interweaved are from the same codec, therefore we can declare a new SEI message as part of this codec.

### Syntax

A new payload type may be defined as in Table 1.

**Table 1 - Interweaving information SEI message.**

| | |
|---|---|
| interweaving_information( payloadSize ) { | **Descript or** |
| **ii_cancel_flag** | u(1) |
| if( ! ii_cancel_flag) { | |
| **ii_number_of_bitstreams** | ue(v) |
| **ii_interweaving_pattern** | u(8) |
| } | |
| } | |

### Semantics

The interweaving information SEI message indicates according to embodiments that the bitstream is an interweaved bitstreams and carries the parameters that describe the way the interweaving has been realised in order to be able to reverse it.

The NAL unit immediately after this SEI message contained in its NAL units are the NAL units of the different bitstreams.

**ii_cancel_flag** equal to 1 indicates that the SEI message cancels the persistence of any previous interweaving information SEI message. When equal to 0, the information that should be considered follows.

**ii**_**number_of_bitstream** specifies the number of bitstream that have been interweaved.

**ii_interweaving_pattern** indicates the interweaving pattern that was used to interweave the different bitstreams. The value 0 indicates that the NAL units of each bitstream are arranged in in the same order (according to an embodiment) in a repetitive pattern, i.e. a,b,c,a,b,c etc... The value 1 indicates that the NAL units of each bitstream are arranged according to embodiments in symmetrical pattern, i.e. a,b,c,c,b,a,a,b,c,c,b,a, etc. The value 2 indicates that the NAL units of each bitstream are arrange in a rotating pattern (further embodiment), i.e. a,b,c,b,c,a,c,a,b,a,b,c, etc. The other values are reserved for future use.

Note that in the interweaving pattern above we signal there is no notion of order of bitstreams, e.g. as they were input to the interweaving function, hence we use the a, b and c to name them. However, for description purposes, one can alternatively describe them as the first bitstream, the second bitstream, etc...

In a further implementation of the method according to the first aspect, the method further comprises signaling in the interweaved bitstreams an interweaving strategy or the interweaving pattern or a number of source bitstreams as interweaving information being transmitted as part of the interweaving bitstream or via a SEI message (e.g. signalling in the interweaving bitstream) or out of band; or performing the steps without signaling e.g. if only two bitstreams or a predetermined number of bitstreams (in sense of known number, predetermined knowledge, e.g. by convention) are used.

In a further implementation of the method according to the first aspect, the method further comprises signaling if the interweaving strategy cannot be inferred.

In a further implementation of the method according to the first aspect, the method further comprises the steps:
- writing the interweaving information to the interweaved bitstream;
- containing the interweaving pattern and the number of source bitstreams
otherwise stopping the interweaving process.

In a further implementation of the method according to the first aspect, the method further comprises signaling of interweaving pattern as interweaving information or via a SEI message or adding a SEI message to the interweaving bitstream followed by one or more first interweaving unit(s)s of the first and second bitstream.

In a further implementation of the method according to the first aspect, the method further comprises signaling of interweaving pattern via a as interweaving information or via a SEI message comprising information one or more of the following:
- parameters indicating the interweaving;
- parameters describing the interweaving strategy;
- parameters describing the interweaving pattern;
- flag for cancels the persistence of any previous interweaving information SEI message;
- number of bitstream that have been interweaved;
- structure or order of interweaving pattern;
- number of pattern slots;
- pattern slot value.

### Embodiment 3: Signalling of interweaving pattern via a new NAL unit type

In this embodiment, the interweaving pattern is signalled in the interweaved bitstream by mean of a new NAL unit type.

Note that this is possible to do since we are in the case that the bitstreams to interweave are from the same codec, therefore we can declare a new NAL unit type as part of this codec.

In below table an example for the AVC standard is provided.

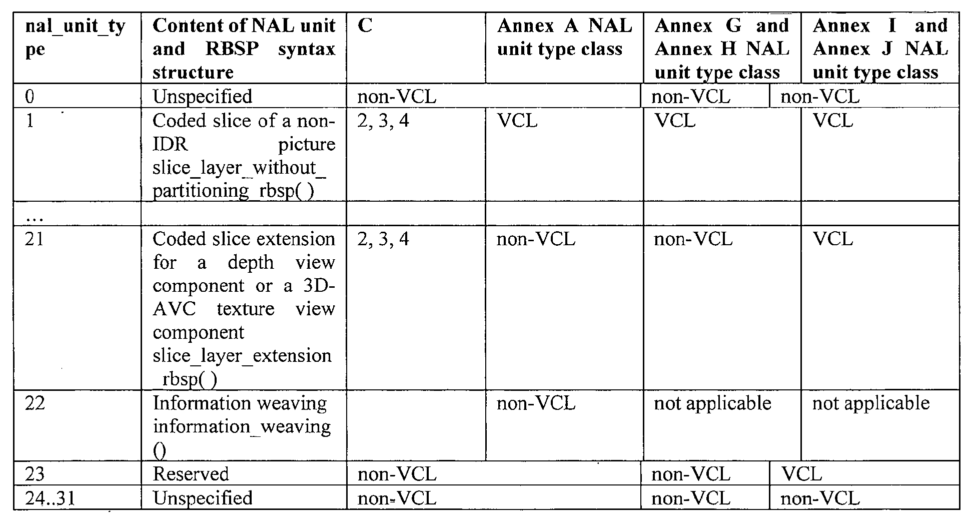

Here the non-VCL NAL unit registered at the line 22 comprises the information waving to be applied to some unit classes.

| | |
|---|---|
| interweaving_information_rbsp() { | **Descriptor** |
| **ii_number_of_bitstreams** | ue(v) |
| **ii_interweaving_pattern** | u(8) |
| **rbsp_trailing_bits( )** | |
| } | |

In a further implementation of the method according to the first aspect, for each new interweaving bitstream a new SEI message is used.

### Case 1b: Bitstreams do not have the same number of NAL units

In the case that the bitstreams to interweave do not have the same number of NAL units then additional measures have to be taken to enable the deinterweaving.

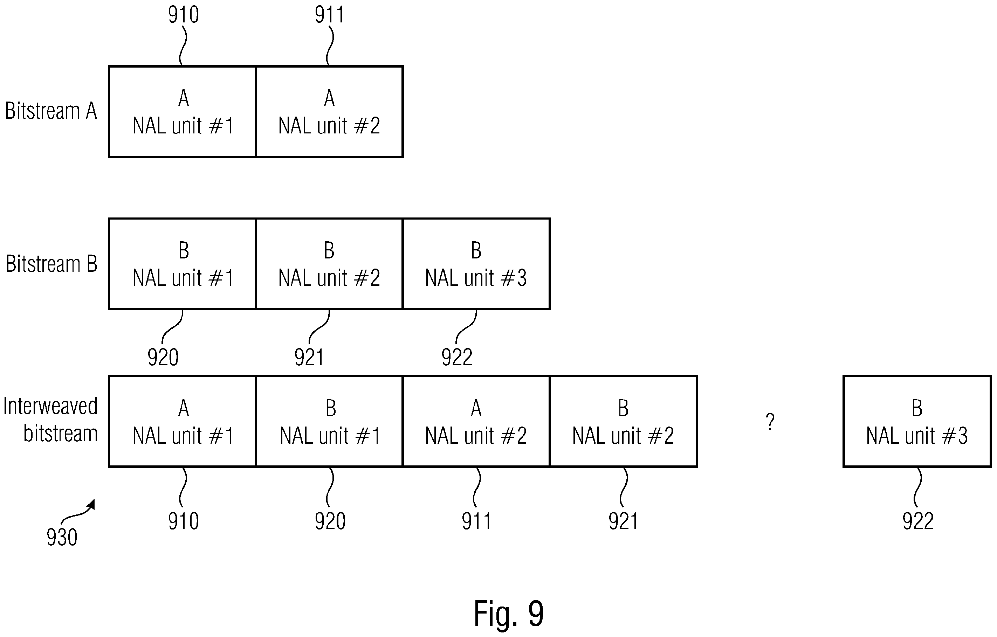

As illustrated in Fig. 9, the question arises on how to handle the case of interweaving the bitstream when they do no have same number of NAL units.

Fig. 9 illustrates the issue with a different number of NAL units according to an embodiment. Here, the interweaving unit 910 and 911 of bitstream A are shown together with the interweaving units 920. 921, 922 of bitstream B in the illustrations of the bitstreams A and B. The same interweaving units are illustrated in the illustration of the interweaved bitstream 930.

In a further implementation of the method according to the first aspect, first and second bitstreams are composed of different number of interweaving units. In a further implementation of the method according to the first aspect, the signaling or the interweaving pattern is adapted to the different number.

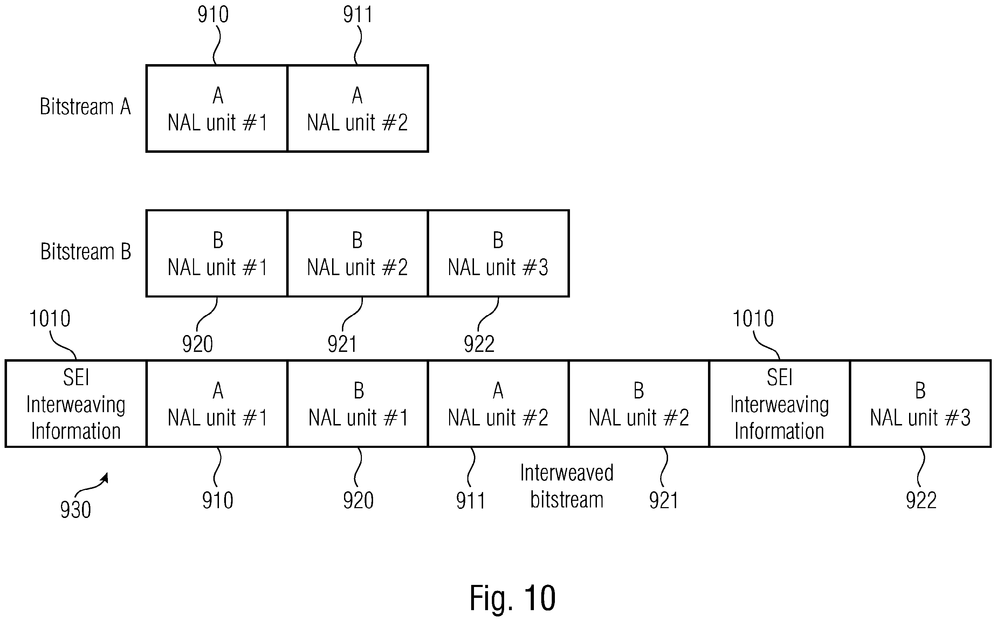

In this figure, the alternating pattern would not hold anymore. In this case, one can insert a new interweaving pattern when the pattern no longer repeats. Based on the signalling before (SEI message or NAL unit), this would be here to signal that there is just one bitstream from a certain point. To illustrate, we can according to embodiments take the example of the SEI message signalling. When the pattern no longer holds, one can insert a new SEI message as depicted in Fig. 10.

Fig. 10 shows an updating interweaving information when pattern changes according to an embodiment. Here, the same reference numeral 910, 911, 920, 921, 922 are used, wherein the SEI message or in general the information message is marked by the reference numeral 1010.

Note that this is merely an example of a change of interweaving pattern. The entity responsible of interweaving the NAL units may also decide on purpose to change the pattern. For instance, it can happen that a given coded frame in a first bitstream is coded with multiple NAL unites while a frame at the same order in the other bitstream is coded with one NAL unit. In this case, the interweaver process may decide to arrange the NAL units per frame.

In a further implementation of the method according to the first aspect, indicating an updated interweaving bitstream a SEI message is used.

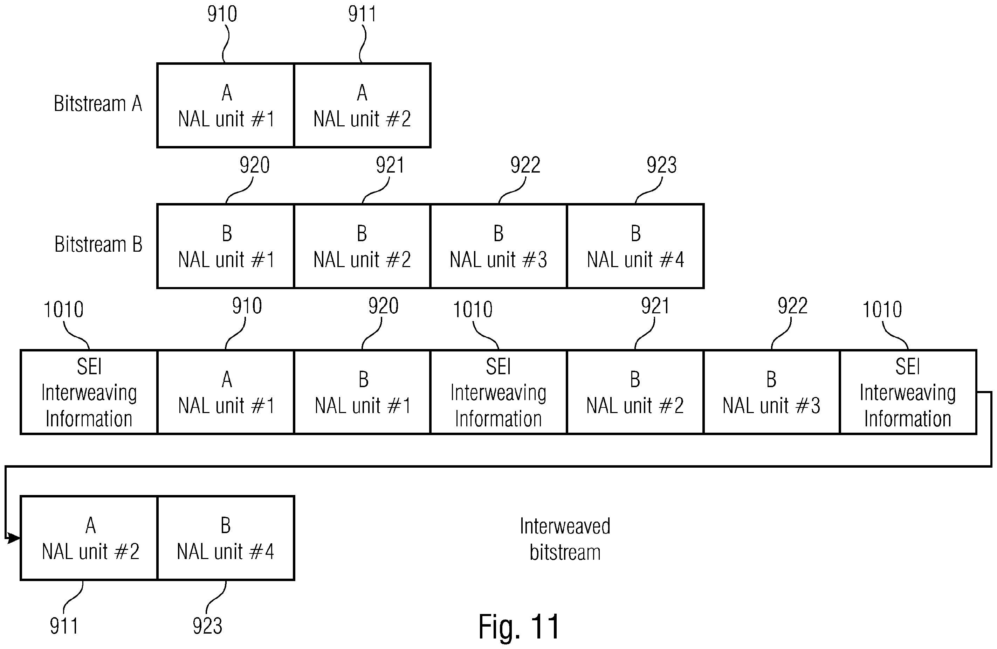

Fig. 11 illustrates the change of pattern chosen by interweaver (here to group by frame) according to an embodiment. In Fig. 11, the interweaving units of bitstream A are marked by 910 and 911, wherein the interweaving units of bitstream B are marked by 920 to 923. As can be seen after the second message 1010 the interweaving packets 921 and 922 are submitted, wherein after the third interweaving message the interweaving units 911 and 923 are submitted.

In another improvement, if the pattern keeps repeating one can also signal this specific pattern. We will show this in the context of SEI message but this is equally applicable to other signalling variants like the NAL unit.

**Table 2 - Interweaving information SEI message with explicit pattern**

| | |
|---|---|
| interweaving_information( payloadSize ) { | **Descriptor** |
| **ii_cancel**_**flag** | u(1) |
| if( ! ii_cancel_flag) { | |
| **ii_number_of_bitstreams** | ue(v) |
| **ii_interweaving_pattern** | u(8) |
| if(ii_interweaving_pattem == 3) { | |
| **ii_number_of_pattern_slots** | ue(v) |
| for(i=0; i< ii_number_of_bitstreams; i++) | |
| **ii_pattern_slot_value** | ue(v) |
| } | |
| } | |
| } | |

### Semantics

The interweaving information SEI message indicates that the bitstream is an interweaved bitstream and carries the parameters that describe the way the interweaving has been realised in order to be able to reverse it.

The NAL units immediately after this SEI message are the NAL units of the different bitstreams.

**ii_cancel_flag** equal to 1 indicates that the SEI message cancels the persistence of any previous interweaving information SEI message. When equal to 0, the information that should be considered follows.

**ii**_**number_of_bitstreams** specifies the number of bitstream that have been interweaved.

**ii_interweaving_pattern** indicates the interweaving pattern that was used to interweave the different bitstreams. The value 0 indicates that the NAL units of each bitstream are arranged in in the same order in a repetitive pattern, i.e. a,b,c,a,b,c etc... The value 1 indicates that the NAL units of each bitstream are arranged in symmetrical pattern, i.e. a,b,c,c,b,a,a,b,c,c,b,a, etc. The value 2 indicates that the NAL units of each bitstream are arrange in a rotating pattern, i.e. a,b,c,b,c,a,c,a,b,a,b,c, etc. The value 3 indicate an explicit pattern. The other values are reserved for future use.

**ii_number_of_pattern_slots** specifies the number of slot in the signalled pattern.

**ii_pattern_slot_value[i]** indicates for the i-th slot of the pattern the value comprised between 0 and ii_number_of_bitstreams - 1 included.

Considering the case in Fig. 11, the signalled value would be:
ii_number_of_bitstreams = 2
ii_interweaving_pattern = 3
ii_number_of_pattern_slots = 4
ii_pattem_slot_value[0] = 0
ii_pattern_slot_value[1] = 1
ii_pattern_slot_value[2] = 1
ii_pattern_slot_value[3] = 1

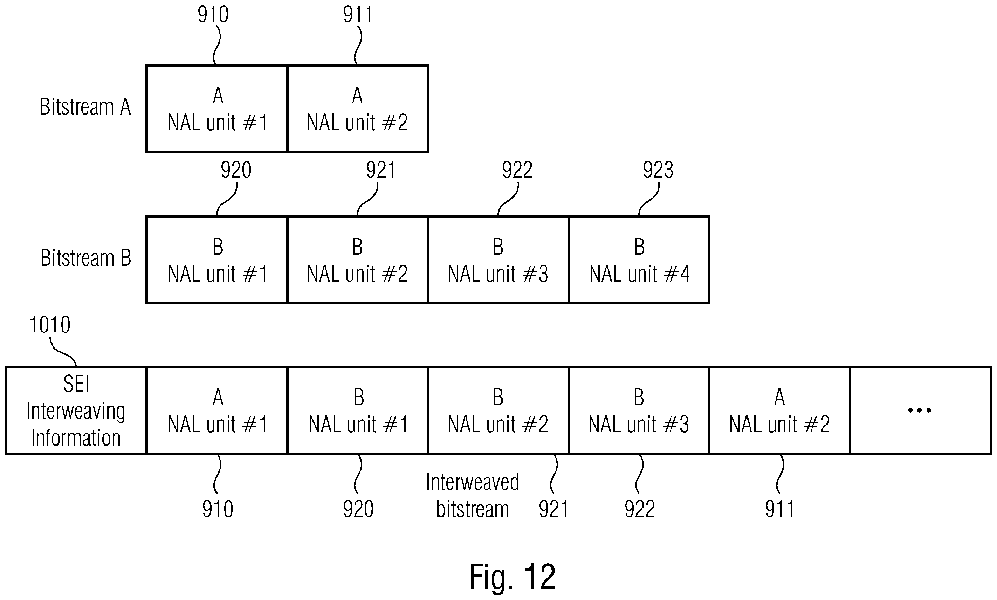

In this case, one does not need to update the interweaving information provided the pattern repeats itself as illustrated in Fig. 12.

Fig. 12 shows an explicit interweaving pattern signaling, where the elements 910, 911, 920 to 923 are arranged in the interweaved bitstream 930 as follows 910, 920, 921, 923, 911, etc. For such a pattern it is preferred that an explicit interweaving pattern is signaled.

As seen with respect to Fig. 9, 10 or 11, the interweaving pattern defines an symmetrical pattern or a rotating pattern or a pattern having a same order over the interweaving units or a pattern defined by
- one or more first interweaving unit(s)s subsequent to each other; or
- one or more second interweaving unit(s) before one or more first interweaving unit(s); or
- a third or further before one or more second interweaving unit(s);
- a first and one or more second interweaving unit(s) being inserted in the interweaved bitstream in an alternating manner.

In a further implementation of the method according to the first aspect, determining an interweaving pattern comprises determining information signaled regarding interweaving pattern via a message or SEI message comprising information one or more of the following:
- parameters indicating the interweaving;
- parameters describing the interweaving strategy;
- parameters describing the interweaving pattern;
- flag for cancels the persistence of any previous interweaving information SEI message;
- number of bitstream that have been interweaved;
- structure or order of interweaving pattern;
- number of pattern slots;
- pattern slot value.

### Scenario 2: Interweaving two bitstreams of different codecs

Thus, according to embodiments the first and the second bitstream may be of different codecs, i.e., of different video coding standard.

Those embodiments are presented in the case of different codecs because the other choices like defining a SEI message is not possible (A certain SEI message is defined within a given codec). However, those embodiments could also be used for the same codecs as yet another alternative to new SEI messages and new NAL unit type.

In the case of scenario 1, the interweaved bitstream has the appearance of a conventional bitstream of the chosen codec since the bitstream boils down to a sequence of NAL units as defined by the correspond standard. As a result, a NAL unit parser compliant to this standard could perfectly handle the parsing of each NAL unit.

In this new scenario, we address according to embodiments the issue of interweaving bitstreams of different codecs from the family of AVC, HEVC, EVC and VVC. Thus, according to embodiments the first and the second bitstreams may be of different codecs, i.e., of different video coding standard.

As can be seen in the background section, the NAL unit format is not identical between all those codecs, the NAL unit is different, the value and position of the NAL unit type in the NAL unit structure is different, etc.. Therefore, it does not seem possible to define a NAL unit which would be at the same time compliant to each NAL unit format defined in those codecs.

However, this section shows an embodiment to enable a cross-codec interweaving technique for any other codec which uses a similar byte stream format as those codecs. Indeed, this byte stream format defines that each NAL unit is prefixed by a start code when the bitstream is stored as a file by itself. That is the bitstream is not written into a container format such as ISOBMFF but instead as an independent file.

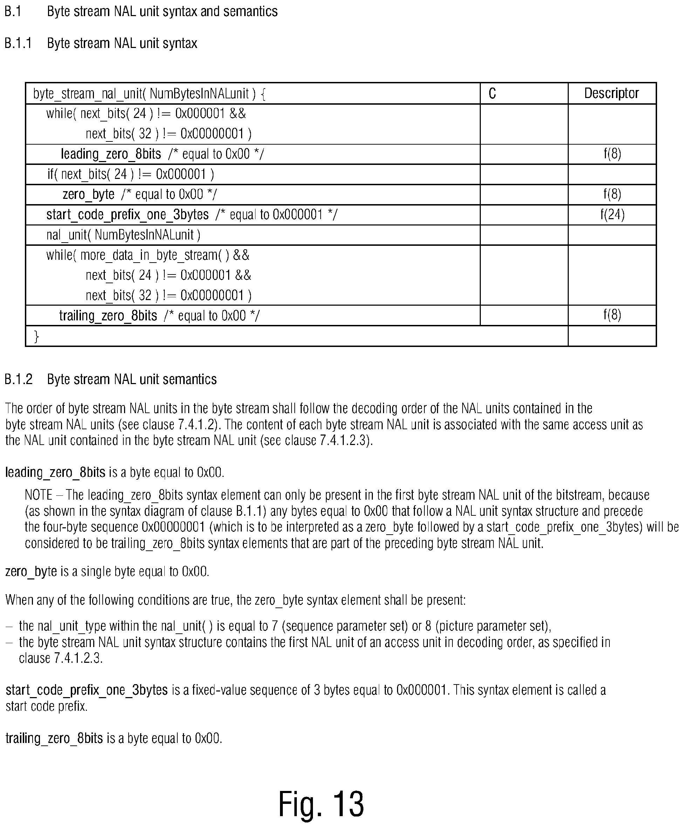

In AVC / H.264, the byte stream format is defined in Annex B as illustrated by Fig. 13 showing a byte stream format in AVC Annex B.

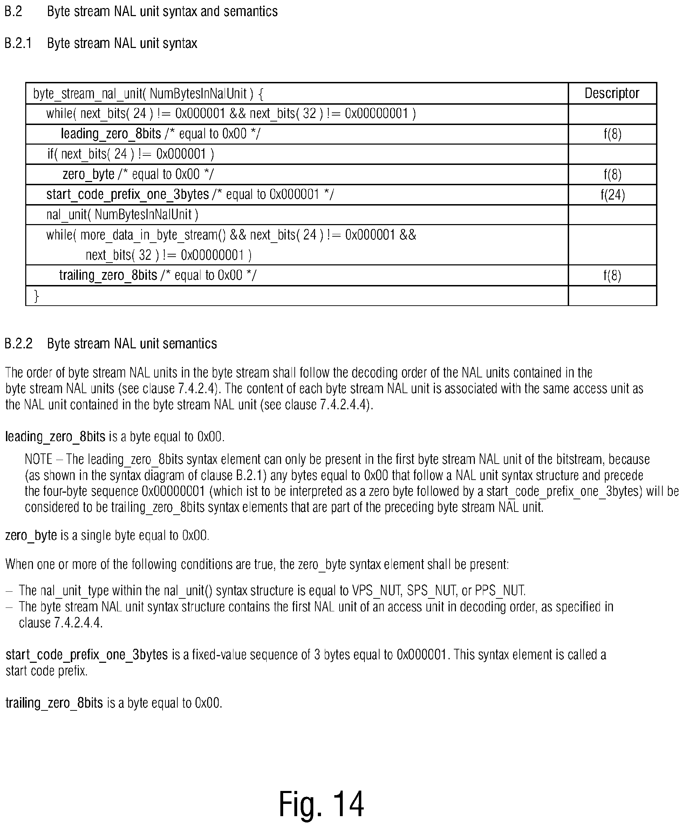

In HEVC / H.265, the byte stream format is defined in Annex B as illustrated by Fig. 14 showing a byte stream format in HEVC Annex B.

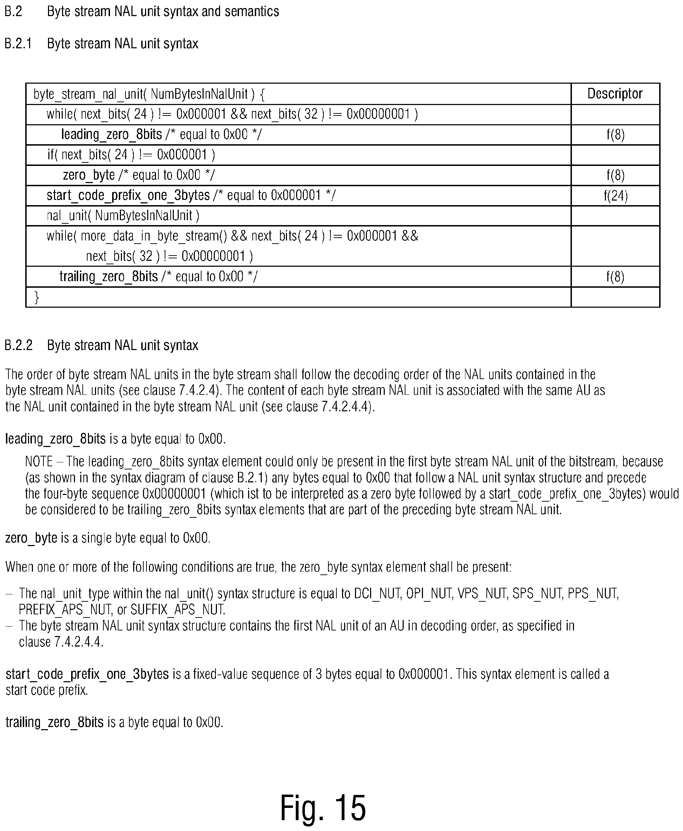

In VVC / H.266, the byte stream format is defined in Annex B as illustrated by Fig. 15 showing a byte stream format in VVC Annex B.

As can be seen, the family of video codecs AVC, HEVC, EVC (not shown here) and VVC use the same byte stream format.

As a result, we can reuse the fact that the separation of NAL units is the same across the codecs to insert in-between each NAL unit information about the interweaving process that took place.

One approach is thus to define a data structure for interweaving information:

| | |
|---|---|
| interweaving_information() { | **Descriptor** |
| **ii_bitstream_identifier** | u(8) |
| } | |

**ii_bitstream_identifier** specifies the original bitstream identifier the next NAL unit belongs to. NAL units with the same identifier belong to the same original bitstream.

In this very simple embodiment, one byte before the first leading_zero of each NAL unit is inserted. This byte as seen above contains the identifier of the original bitstream to which the next NAL unit belongs too.

By doing so, each NAL unit is prefixed with a marker to be able to re arrange them after interweaving.

This data structure can of course be more complicated as shown with any of the previous signalling.

The point here is that a legacy bitstream parser of AVC, EVC, HEVC or VVC will skip those in-between bytes as seen as garbage data. For parser aware of this data, they will be able to deinterweave the bitstream into the source bitstreams.

In addition, it may be useful for a parser to know which codec is the next NAL unit from. This way the parser may decide to parse at least the NAL unit header or even more. To this end, the interweaving information can be complemented with this information. To keep the overhead minimised, we can still use one byte and share the byte for both information as follows:

| | |
|---|---|
| interweaving_information() { | **Descriptor** |
| **ii_bitstream_identifier** | u(5) |
| **ii_codec_identifier** | u(3) |
| } | |

**ii_bitstream_identifier** specifies the original bitstream identifier the next NAL unit belongs to. NAL units with the same identifier belong to the same original bitstream.
**ii**_**codec**_**identifier** indicate the nature of the next NAL unit. The value 0 indicates that the next NAL unit is an AVC NAL unit. The value 1 indicates that the next NAL unit is an HEVC NAL unit. The value 2 indicates that the next EVC unit is an HEVC NAL unit. The value 3 indicates that the next NAL unit is an VVC NAL unit. The values 4 to 8 are reserved for future use.

In a further implementation of the method according to the first aspect, the first and second bitstreams are of the different codec or different video coding standard.

In a further implementation of the method according to the first aspect, inserting in-between each interweaving unit or interweaving unit of different codec a codec information message about the interweaving process or interweaving pattern.

In a further implementation of the method according to the first aspect, the codec information message comprising one or more of the following:
- bitstream identifier specifying a source bitstream for a subsequent interweaving unit;
- codec identifier indicating a nature of a subsequent interweaving unit;
- indication on compliancy to legacy bitstream parser (e.g. whether the interweaving unit are merely copied or instead transformed so as to signal whether legacy parser is enough or whether you need specific parser to be able to generate back the convention NAL units as you deinterweave).

### Other embodiments

The interweaving information can also be send out of band, that is not part of the interweaved bitstream. This can be the case for instance in real-time transmission e.g. via RTP. In this case, the interweaving information can be send as part of metadata of the RTP streams.

If such interweaved bitstream is stored into a container format such as ISOBMFF then the metadata on the interweaving information can be stored as metadata in the track header box, in the sample entry of the track or any other location. To preserve the benefit of the invention, an interweaved bitstream would be stored in a single track of a ISOBMFF file. If stored into several tracks then it falls back onto conventional carriage of multiple bitstreams as multiple tracks.

An implementation according to an embodiment provides a data stream having encoded thereinto a video or picture, wherein the data stream comprises an interweaved bitstream aggregate including content of at least a first bitstream and a second bitstream into, wherein one or more first interweaving unit(s) of the first bitstream and one or more first interweaving unit(s) of the second bitstream to the interweaved bitstream may be arranged according to an interweaving strategy and/or an interweaving pattern.

For example, same being stored into a container format, such as ISOBMFF.

According to an embodiment, an interweaving information being transmitted as part of the interweaving bitstream or out of band or a SEI message is stored as metadata in the track header box, in the sample entry of the track or any other.

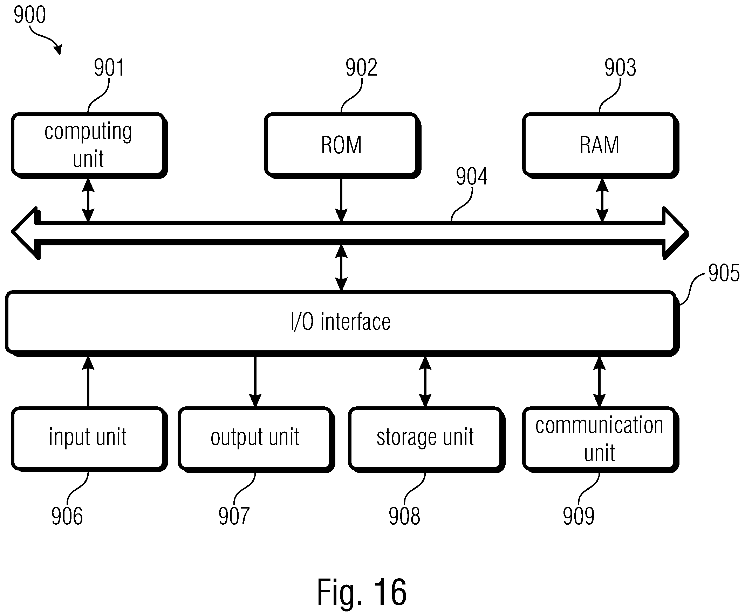

Fig. 16 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:
A 1^{st} embodiment provides a method for encoding and aggregating at least a first bitstream and a second bitstream into an interweaved bitstream, the first bitstream and the second bitstream being independent from each other, the method comprising:
   - determining an interweaving pattern;
   - determine one or more first interweaving unit(s) and one or more second interweaving unit(s),wherein the one or more first interweaving unit(s) is used for the first bitstream, the one or more second interweaving unit(s) is used for the second bitstream;
   - writing the one or more first interweaving unit(s) and the second interweaving unit to the interweaved bitstream.
A 2^{nd} embodiment provides the method of the 1^{st} embodiment, further comprising:
   - determining a further first interweaving unit and a further second interweaving unit;
   - writing the further first interweaving unit and the further second interweaving unit to the interweaved bitstream.
A 3^{rd} embodiment provides the method of the 2^{nd} embodiment, wherein determining and writing are repeated as long as more data exist.
A 4^{th} embodiment provides the method of the 1^{st} to 3^{rd} embodiments, wherein determining and writing is repeated for one or more first interweaving unit(s) of the third or further independent bitstream.
A 5^{th} embodiment provides the method of the 1^{st} to 4^{th} embodiments, wherein
   determining the one or more first interweaving unit(s) of the first bitstream and the one or more first interweaving unit(s) of the second bitstream comprises a check whether of the first and second bitstream exist; and/or
   determining the one or more first interweaving unit(s) of the third or further independent bitstream comprises a check whether of the third or further independent bitstream exist.
A 6^{th} embodiment provides the method of the 1^{st} to 5^{th} embodiments, further comprising
   signaling in the interweaved bitstreams an interweaving strategy or an interweaving pattern or a number of source bitstreams as interweaving information being transmitted as part of the interweaving bitstream or out of band or via a SEI message; or
   performing the steps without signaling if a specific number of bitstreams (e.g. two) are used.
A 7^{th} embodiment provides the method of the 1^{st} to 6^{th} embodiments, further comprising signaling the case when interweaving strategy cannot be inferred.
An 8^{th} embodiment provides the method of the 7^{th} embodiment, further comprising the steps:
   writing the interweaving information to the interweaved bitstream;
   containing the interweaving pattern and the number of source bitstreams.
A 9^{th} embodiment provides the method of the 1^{st} to 8^{th} embodiments, further comprising signaling of interweaving pattern as interweaving information or via a SEI message or adding a SEI message to the interweaving bitstream followed by one or more first interweaving unit(s)s of the first and second bitstream.
A 10^{th} embodiment provides the method of the 1^{st} to 9^{th} embodiments, further comprising signaling of interweaving pattern via a as interweaving information or via a SEI message comprising information one or more of the following:
   - parameters indicating the interweaving;
   - parameters describing an interweaving strategy;
   - parameters describing the interweaving pattern;
   - flag for cancels the persistence of any previous interweaving information SEI message;
   - number of bitstream that have been interweaved;
   - structure or order of interweaving pattern;
   - number of pattern slots;
   - pattern slot value.
An 11^{th} embodiment provides the method of the 1^{st} to 10^{th} embodiments, wherein for each new interweaved bitstream a new SEI message is transmitted.
A 12^{th} embodiment provides the method of the 1^{st} to 11^{th} embodiments, wherein for indicating an updated interweaving process a SEI message is transmitted.
A 13^{th} embodiment provides the method of the 1^{st} to 12^{th} embodiments, wherein the interweaving pattern is determined from the context, e.g. session information, system information, or by convention of standards.
A 14^{th} embodiment provides the method of the 1^{st} to 13^{th} embodiments, wherein the interweaving pattern defines an symmetrical pattern or a rotating pattern or a pattern having a same order over the interweaving units or a pattern defined by
   - one or more first interweaving unit(s)s subsequent to each other; or
   - one or more second interweaving unit(s) before one or more first interweaving unit(s); or
   - a third or further before one or more second interweaving unit(s);
   - a first and one or more second interweaving unit(s) being inserted in the interweaved bitstream in an alternating manner.
A 15^{th} embodiment provides the method of the 1^{st} to 14^{th} embodiments, wherein the first and second bitstreams are of the same codec or same video coding standard.
A 16^{th} embodiment provides the method of the 1^{st} to 15^{th} embodiments,
   - wherein the one or more first interweaving unit(s) is a single NAL units or several NAL units, e.g. an access unit or frame.
A 17^{th} embodiment provides the method of the 1^{st} to 16^{th} embodiments, wherein first and second bitstreams are composed of same number of interweaving units.
An 18^{th} embodiment provides the method of the 1^{st} to 17^{th} embodiments, wherein first and second bitstreams are composed of different number of interweaving units; and/or
   wherein the first and second bitstreams are of the different codec or different video coding standard; and/or
   wherein the one or more first interweaving unit(s) is a single NAL units or several NAL units, e.g. an access unit or frame.
A 19^{th} embodiment provides the method of the 18^{th} embodiment, wherein the signaling or the interweaving pattern is adapted to the different number of interweaving unit.
A 20^{th} embodiment provides the method of the 1^{st} to 19^{th} embodiments, wherein the first and second bitstreams are of the different codec or different video coding standard.
A 21^{st} embodiment provides the method of the 1^{st} to 20^{th} embodiments, wherein inserting in-between each interweaving unit or interweaving units of different codec a codec information message about the interweaving process or interweaving pattern; or
   wherein inserting in-between each interweaving unit or interweaving unit of different codec a codec information message about the interweaving process or interweaving pattern and the codec information message comprising one or more of the following:
   - bitstream identifier specifying a source bitstream for a subsequent interweaving unit;
   - codec identifier indicating a nature of a subsequent interweaving unit;
   - indication on compliancy to legacy bitstream parser.
A 22^{th} embodiment provides the method of the 21^{st} embodiment, the codec information message comprising one or more of the following:
   - bitstream identifier specifying a source bitstream for a subsequent interweaving unit;
   - codec identifier indicating a nature of a subsequent interweaving unit;
   - indication on compliancy to legacy bitstream parser .
A 23^{rd} embodiment provides a method for decoding and extracting at least a first bitstream and a second bitstream from an interweaved bitstream, the first bitstream and the second bitstream being independent from each other, the method comprising:
   determining an interweaving pattern;
   determining one or more first interweaving unit(s) of a first bitstream and a second bitstream within the interweaved bitstream;
   writing one or more first interweaving unit(s) of the first bitstream to an output of the first bitstream and writing one or more first interweaving unit(s) of the second bitstream to an output bitstream of the second bitstream.
A 24^{th} embodiment provides the method of the 23^{rd} embodiment, wherein determining and writing of a further first or second interweaving unit are repeated as long as more data exist.
A 25^{th} embodiment provides the method of the 23^{rd} to 24^{th} embodiments, wherein determining and writing is repeated for one or more first interweaving unit(s) of the third or further independent bitstream.
A 26^{th} embodiment provides the method of the 23^{rd} to 25^{th} embodiments, further comprising stopping the deinterweaving process if no further data exist.
A 27^{th} embodiment provides the method of the 23^{rd} to 26^{th} embodiments, wherein determining an interweaving pattern comprises determining a signal on an interweaving strategy in the interweaved bitstream or determining a presence or absence of a signal in the interweaved bitstream.
A 28^{th} embodiment provides the method of the 23^{rd} to 27^{th} embodiments, wherein determining an interweaving pattern comprises determining information signaled in the interweaved bitstreams on interweaving strategy or on the interweaving pattern or a number of source bitstreams or performing without signaling if only two bitstreams are used.
A 29^{th} embodiment provides the method of the 23^{rd} to 28^{th} embodiment, wherein determining an interweaving pattern comprises determining information signaled regarding interweaving pattern via a SEI message.
A 30^{th} embodiment provides the method of the 23^{rd} to 29^{th} embodiments, wherein determining an interweaving pattern comprises determining information signaled regarding interweaving pattern via a message or SEI message comprising information one or more of the following:
   - parameters indicating the interweaving;
   - parameters describing an interweaving strategy;
   - parameters describing the interweaving pattern;
   - flag for cancels the persistence of any previous interweaving information SEI message;
   - number of bitstream that have been interweaved;
   - structure or order of interweaving pattern;
   - number of pattern slots;
   - pattern slot value.
A 31^{st} embodiment provides the method of the 23^{rd} to 30^{th} embodiments, wherein determining a new interweaving bitstream using a new SEI message, wherein for each new interweaving bitstream a new SEI message is used.
A 32^{nd} embodiment provides the method of the 23^{rd} to 31^{st} embodiments, wherein determining an updated interweaving bitstream indicated by a SEI message as part of the determining interweaving pattern.
A 33^{rd} embodiment provides the method of the 23^{rd} to 32^{nd} embodiments, wherein determining one or more first interweaving unit(s) of a first bitstream and a second bitstream within the interweaved bitstream is done using the message or the SEI message.
A 34^{th} embodiment provides the method of the 23^{rd} to 33^{rd} embodiments, wherein writing is performed according the interweaved pattern.
A 35^{th} embodiment provides the method of the 23^{rd} to 34^{th} embodiments, wherein the interweaving pattern defines an symmetrical pattern or a rotating pattern or a pattern having a same order over the interweaving units or a pattern defined by
   - one or more first interweaving unit(s)s subsequent to each other; or
   - one or more second interweaving unit(s) before one or more first interweaving unit(s); or
   - a third or further before one or more second interweaving unit(s);
   - a first and one or more second interweaving unit(s) being inserted in the interweaved bitstream in an alternating manner;
   - odd interweaving units to be extracted from the interweaved bitstream as a first and even interweaving units to be extracted from the interweaved bitstream as one or more second interweaving unit(s).
A 36^{th} embodiment provides the method of the 23^{rd} to 35^{th} embodiments, wherein the first and second bitstreams are of the same codec or same video coding standard.
A 37^{th} embodiment provides the method of the 23^{rd} to 36^{th} embodiments, wherein the one or more first interweaving unit(s) is a single NAL units or several NAL units, e.g. an access unit or frame.
A 38^{th} embodiment provides the method of the 23^{rd} to 37^{th} embodiments, wherein first and second bitstreams are composed of same number of interweaving units.
A 39^{th} embodiment provides the method of the 23^{rd} to 38^{th} embodiments, wherein first and second bitstreams are composed of different number of interweaving units.
A 40^{th} embodiment provides the method of the 23^{rd} to 39^{th} embodiments, wherein the first and second bitstreams are of the different codec or different video coding standard.
A 41^{st} embodiment provides the method of the 23^{rd} to 40^{th} embodiments, wherein determining an interweaving pattern comprises determining codec information message indicating interweaving units of different codec.
A 42^{nd} embodiment provides the method of the 41^{st} embodiment, the codec information message comprising one or more of the following:
   - bitstream identifier specifying a source bitstream for a subsequent interweaving unit;
   - codec identifier indicating a nature of a subsequent interweaving unit;
   - indication on compliancy to legacy bitstream parser.
A 43^{rd} embodiment provides a method for encoding comprising the steps of one of the 1^{st} to 22^{nd} embodiments.
A 44^{th} embodiment provides a method for decoding comprising the steps of one of the 23^{rd} to 42^{nd} embodiments.,
A 45^{th} embodiment provides a non-transitory computer-readable storage medium comprising instructions which, when executed by a computer, cause the computer to carry out the method of any one of the preceding claims.
A 46^{th} embodiment provides an apparatus for encoding and aggregating at least a first bitstream and a second bitstream into an interweaved bitstream, the first bitstream and the second bitstream being independent from each other, comprising a processor for:
   determining an interweaving pattern;
   determine one or more first interweaving unit(s) and one or more second interweaving unit(s),wherein the one or more first interweaving unit(s) is used for the first bitstream, the one or more second interweaving unit(s) is used for the second bitstream;
   writing the one or more first interweaving unit(s) and the second interweaving unit to the interweaved bitstream.
A 47^{th} embodiment provides an apparatus for decoding and extracting at least a first bitstream and a second bitstream from an interweaved bitstream, the first bitstream and the second bitstream being independent from each other, comprising a processor for:
   determining an interweaving pattern;
   determining one or more first interweaving unit(s) of a first bitstream and a second bitstream within the interweaved bitstream;
   writing one or more first interweaving unit(s) of the first bitstream to an output of the first bitstream and writing one or more first interweaving unit(s) of the second bitstream to an output bitstream of the second bitstream.
A 48^{th} embodiment provides an encoder comprising the apparatus according to the 46^{th} embodiment.
A 49^{th} embodiment provides a decoder comprising the apparatus according to the 47^{th} embodiment.
A 50^{th} embodiment provides a data stream having encoded thereinto a video or picture, wherein the data stream comprises an interweaved bitstream aggregate including content of at least a first bitstream and a second bitstream into, the first bitstream and the second bitstream being independent from each other, wherein at least one or more first interweaving unit(s) of the first bitstream and at least one or more first interweaving unit(s) of the second bitstream to the interweaved bitstream may be arranged according to an interweaving strategy and/or an interweaving pattern.
A 51^{st} embodiment provides the data stream according to the 50^{th} embodiment, being stored into a container format, such as ISOBMFF.
A 52^{nd} embodiment provides the data stream according to the 50^{th} or 51^{st} embodiment, wherein an interweaving information being transmitted as part of the interweaving bitstream or out of band or a SEI message is stored as metadata in the track header box, in the sample entry of the track or any other.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] AV1 Bitstream & Decoding Process Specification, 2019-01-08, The Alliance for Open Media, https://aomediacodec.github.io/av1-spec/av1-spec.pdf
[2] ISO/IEC 14496-1:2010 - Information technology - Coding of audio-visual objects - Part 1: Systems https://www.iso.org/standard/55688.html
[3] ISO/IEC 14496-15:2022, Information technology - Coding of audio-visual objects Part 15: Carriage of network abstraction layer (NAL) unit structured video in the ISO base media file format, https://www.iso.org/standard/83336.html

## Claims

1. A method for encoding and aggregating at least a first bitstream and a second bitstream into an interweaved bitstream, the first bitstream and the second bitstream being independent from each other, the method comprising:
- determining an interweaving pattern;
- determine one or more first interweaving unit(s) and one or more second interweaving unit(s), wherein the one or more first interweaving unit(s) is used for the first bitstream, the one or more second interweaving unit(s) is used for the second bitstream;
- writing the one or more first interweaving unit(s) and the second interweaving unit to the interweaved bitstream.

2. A method for decoding and extracting at least a first bitstream and a second bitstream from an interweaved bitstream, the first bitstream and the second bitstream being independent from each other, the method comprising:
- determining an interweaving pattern;
- determining one or more first interweaving unit(s) of a first bitstream and a second bitstream within the interweaved bitstream;
- writing one or more first interweaving unit(s) of the first bitstream to an output of the first bitstream and writing one or more first interweaving unit(s) of the second bitstream to an output bitstream of the second bitstream.

3. The method of one of the preceding claims,
wherein the interweaved bitstreams comprise at least one of an interweaving pattern or a number of source bitstreams as interweaving information being transmitted as part of the interweaving bitstream or out of band or via a SEI message.

4. The method of one of the preceding claims, further comprising
performing the steps of "determining an interweaving pattern", "determine one or more first interweaving unit(s) and one or more second interweaving unit(s)" and "writing the one or more first interweaving unit(s) and the second interweaving unit to the interweaved bitstream" without signaling if a specific number of bitstreams (e.g. two) are used.

5. The method of one of the preceding claims, further comprising signaling of interweaving pattern via a as interweaving information or via a SEI message comprising information one or more of the following:
• parameters indicating the interweaving;
• parameters describing an interweaving strategy;
• parameters describing the interweaving pattern;
• flag for cancels the persistence of any previous interweaving information SEI message;
• number of bitstream that have been interweaved;
• structure or order of interweaving pattern;
• number of pattern slots;
• pattern slot value.

6. The method of one of the preceding claims, wherein for indicating an updated interweaving process a SEI message is transmitted.

7. The method of one of the preceding claims, wherein the interweaving pattern defines an symmetrical pattern or a rotating pattern or a pattern having a same order over the interweaving units or a pattern defined by
- one or more first interweaving unit(s)s subsequent to each other; or
- one or more second interweaving unit(s) before one or more first interweaving unit(s); or
- a third or further before one or more second interweaving unit(s);
- a first and one or more second interweaving unit(s) being inserted in the interweaved bitstream in an alternating manner.

8. The method of one of the preceding claims, wherein first and second bitstreams are composed of different number of interweaving units.

9. The method of one of the preceding claims, wherein the first and second bitstreams are of the different codec or different video coding standard.

10. The method of one of the preceding claims, wherein the one or more first interweaving unit(s) is a single NAL units or several NAL units, e.g. an access unit or frame.

11. The method of one of the preceding claims, wherein inserting in-between each interweaving unit or interweaving units of different codec a codec information message about the interweaving process or interweaving pattern; or
wherein inserting in-between each interweaving unit or interweaving unit of different codec a codec information message about the interweaving process or interweaving pattern and the codec information message comprising one or more of the following:
o bitstream identifier specifying a source bitstream for a subsequent interweaving unit;
o codec identifier indicating a nature of a subsequent interweaving unit;
o indication on compliancy to legacy bitstream parser.

12. The method of claim 11, the codec information message comprising one or more of the following:
o bitstream identifier specifying a source bitstream for a subsequent interweaving unit;
o codec identifier indicating a nature of a subsequent interweaving unit;
o indication on compliancy to legacy bitstream parser.

13. An apparatus for encoding and aggregating at least a first bitstream and a second bitstream into an interweaved bitstream, the first bitstream and the second bitstream being independent from each other, comprising a processor for:
- determining an interweaving pattern;
- determine one or more first interweaving unit(s) and one or more second interweaving unit(s), wherein the one or more first interweaving unit(s) is used for the first bitstream, the one or more second interweaving unit(s) is used for the second bitstream;
- writing the one or more first interweaving unit(s) and the second interweaving unit to the interweaved bitstream.

14. An apparatus for decoding and extracting at least a first bitstream and a second bitstream from an interweaved bitstream, the first bitstream and the second bitstream being independent from each other, comprising a processor for:
- determining an interweaving pattern;
- determining one or more first interweaving unit(s) of a first bitstream and a second bitstream within the interweaved bitstream;
- writing one or more first interweaving unit(s) of the first bitstream to an output of the first bitstream and writing one or more first interweaving unit(s) of the second bitstream to an output bitstream of the second bitstream.

15. A data stream having encoded thereinto a video or picture, wherein the data stream comprises an interweaved bitstream aggregate including content of at least a first bitstream and a second bitstream into, the first bitstream and the second bitstream being independent from each other, wherein at least one or more first interweaving unit(s) of the first bitstream and at least one or more first interweaving unit(s) of the second bitstream to the interweaved bitstream are arranged according to an interweaving strategy and/or an interweaving pattern.
